(19) **Europäisches Patentamt / European Patent Office / Office européen des brevets**

(11) **EP 4 043 244 B1**

(12) # EUROPEAN PATENT SPECIFICATION

(45) Date of publication and mention of the grant of the patent:
**12.06.2024 Bulletin 2024/24**

(21) Application number: **20897396.6**

(22) Date of filing: **22.06.2020**

(51) International Patent Classification (IPC):
**B60C 11/00** (2006.01)   **B60C 11/12** (2006.01)
**B60C 11/11** (2006.01)   **B60C 11/03** (2006.01)

(52) Cooperative Patent Classification (CPC):
**B60C 11/11; B60C 11/0041; B60C 11/0302;**
**B60C 11/0306; B60C 11/1272; B60C 11/1281;**
B60C 2011/0016; B60C 2011/0025;
B60C 2011/0344; B60C 2011/1209;
B60C 2011/1254

(86) International application number:
**PCT/JP2020/024393**

(87) International publication number:
**WO 2021/111662 (10.06.2021 Gazette 2021/23)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **05.12.2019   JP 2019220446**

(43) Date of publication of application:
**17.08.2022   Bulletin 2022/33**

(73) Proprietor: **BRIDGESTONE CORPORATION**
**Chuo-ku**
**Tokyo 104-8340 (JP)**

(72) Inventor: **TOMIDA Tatsuya**
**Tokyo 104-8340 (JP)**

(74) Representative: **Marks & Clerk LLP**
**15 Fetter Lane**
**London EC4A 1BW (GB)**

(56) References cited:
WO-A1-2018/225501   JP-A- H07 257 111
JP-A- 2013 091 480   JP-A- 2014 097 697
JP-A- 2016 540 689   JP-A- 2018 203 183
JP-A- 2019 064 481   JP-A- 2019 064 481
US-B2- 8 936 055

**Description**

TECHNICAL FIELD

The present invention relates to a pneumatic tire.

BACKGROUND

In pneumatic tires for winter use, various measures have been taken to improve the on-ice performance. For example, foamed rubber is used for the tread rubber to improve the water drainage property, and sipes are formed on the tread surface to remove a water film. For example, see patent literature (PTL) 1.

(PTL) 2 relates to a tire capable of achieving both braking performance on a snowy and dry road surface and a dry road surface. A circumferential groove and a lateral groove are formed in the tread portion, a land portion is divided by the circumferential groove and the lateral groove, and a sipe extending in the tire width direction is formed in the land portion.
(PTL) 3 relates to a pneumatic tire comprising a plurality of blocks on a tread surface.

CITATION LIST

Patent Literature

PTL 1: JP 2006-82632 A
PTL 2: JP 2019 064481 A
PTL 3: WO 2018 225501 A1

SUMMARY

(Technical Problem)

On the other hand, improved on-snow performance is also required in pneumatic tires for winter use. However, in the case of using soft rubber, such as foamed rubber, for the tread rubber, sufficient edge pressure might not be obtained when the opening of a widthwise sipe contacts a snow-covered road surface, thereby degrading the on-snow performance. It has thus been difficult to achieve both on-ice performance and on-snow performance.
The present disclosure aims to provide a pneumatic tire that achieves both on-ice performance and on-snow performance.

(Solution to Problem)

A summary of the present invention is as follows.
A pneumatic tire of the present invention includes, on a tread surface, a plurality of circumferential main grooves extending in a tire circumferential direction, and a plurality of land portions defined between circumferential main grooves adjacent in a tire width direction among the plurality of circumferential main grooves or by the circumferential main grooves and tread edges, wherein

the land portions include a plurality of widthwise grooves extending in the tire width direction and are divided into a plurality of blocks by the widthwise grooves,
at least one widthwise sipe extending in the tire width direction is included within the blocks,
hard rubber with a higher elastic modulus than that of tread rubber is disposed in a tire radial region including at least an opening to the tread surface of a wall defining the widthwise sipe, and
microfabrication is applied in at least one region of the tread surface surrounding at least a portion of the opening of the widthwise sipe to the tread surface,
wherein the widthwise sipe includes a widened portion, at a groove bottom side, in which a sipe width is larger than at the tread surface side.

Here, the "tread surface" refers to the entire tread surface in the tire circumferential direction that comes into contact with the road surface when the pneumatic tire is mounted on an applicable rim, filled to a prescribed internal pressure, and subjected to the maximum load.

The "circumferential main groove" refers to a groove extending in the tire circumferential direction and having an opening width of 1.5 mm or more at the aforementioned tread surface when the pneumatic tire is mounted on an applicable rim, filled to a prescribed internal pressure, and under no load.

The "tread edges" refer to the outermost points of the aforementioned tread surface on both sides in the tire width direction.

The "widthwise groove" refers to a groove extending in the tire width direction and having an opening width of 1.0 mm or more at the aforementioned tread surface when the pneumatic tire is mounted on an applicable rim, filled to a prescribed internal pressure, and under no load.

The "widthwise sipe" refers to a sipe extending in the tire width direction and having an opening width of less than 1.0 mm at the aforementioned tread surface when the pneumatic tire is mounted on an applicable rim, filled to a prescribed internal pressure, and under no load.

As the "elastic modulus", the value (M (modulus) 25) obtained by conducting a tensile test in accordance with JIS K 6251 and measuring the tensile stress at 25% elongation was adopted.

In the present specification, the "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "prescribed internal pressure" represents the air pressure (maximum air pressure) corresponding to the maximum load capability of a single wheel in an applicable size/ply rating described by the aforementioned JATMA or the like. In the case of a size not listed in the industrial standards, the "prescribed internal pressure" refers to the air pressure (maximum air pressure) corresponding to the maximum load capability prescribed for each vehicle on which the tire is mounted.

The "maximum load" refers to the load corresponding to the aforementioned maximum load capability.

In the present description, the surface roughness Ra refers to the centerline average roughness measured based on JIS B 0601. The kurtosis Rku refers to the sharpness of the surface roughness calculated based on ISO 25178.

(Advantageous Effect)

According to the present invention a pneumatic tire that achieves both on-ice performance and on-snow performance can be provided.

BRIEF DESCRIPTION OF THE DRAWINGS

In the accompanying drawings:

FIG. 1 is a developed view schematically illustrating a tread pattern of a pneumatic tire according to an embodiment of the present invention;
FIG. 2 is a transparent perspective view of the block in FIG. 1; and
FIG. 3 is a plan view of the block in FIG. 1.

DETAILED DESCRIPTION

Embodiments of the present invention are described below in detail with reference to the drawings.

The internal structure and the like of the pneumatic tire (hereinafter referred to simply as the tire) can be the same as those of conventional tires. As an example, the tire can have a pair of bead portions, a pair of sidewall portions connected to the pair of bead portions, and a tread portion disposed between the pair of sidewall portions. The tire can also have a carcass extending toroidally between the pair of bead portions and a belt disposed on the radially outward side of a crown portion of the carcass.

Unless otherwise specified, the dimensions and the like refer to the dimensions and the like when the tire is mounted on an applicable rim, filled to the prescribed internal pressure, and under no load.

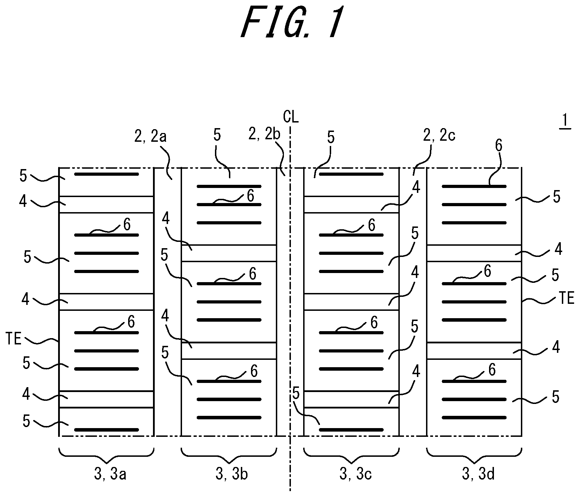

FIG. 1 is a developed view schematically illustrating a tread pattern of a pneumatic tire according to an embodiment of the present invention.

As illustrated in FIG. 1, the tire in the present example includes, on a tread surface 1, a plurality (three in the illustrated example) of circumferential main grooves 2 (2a, 2b, 2c) extending in the tire circumferential direction, and a plurality (four in the illustrated example) of land portions 3 (3a, 3b, 3c, 3d) defined by circumferential main grooves 2 adjacent in the tire width direction among the plurality of circumferential main grooves 2, or by a circumferential main groove (2a, 2c) and a tread edge TE. In the present example, one circumferential main groove 2b is positioned on the tire equatorial plane CL, and the other circumferential main grooves 2a, 2c are respectively positioned in one half and the other half, in the tire width direction, divided by the tire equatorial plane CL. In the present example, two land portions 3 are arranged in each tire widthwise half. In the example illustrated in FIG. 1, the number of circumferential main grooves 2 is three, but the number can be one or two, or can be four or more. Accordingly, the number of land portions 3 can also be two or three, or can be five or more.

Each land portion 3 includes a plurality of widthwise grooves 4 extending in the tire width direction and is divided into a plurality of blocks 5 by the widthwise grooves 4. In the present example, all of the land portions 3 are divided into blocks 5, but some of the land portions 3 can also be rib-like land portions that are not completely divided by a widthwise groove. In the present description, a land portion 3 divided in the tire circumferential direction by a widthwise sipe is still considered to be a rib-like land portion as long as the land portion 3 is not completely divided by a widthwise groove.

In the present embodiment, a plurality of widthwise sipes 6 (three in each block 5 in the illustrated example) extending in the tire width direction are provided in each block 5, as illustrated in FIG. 1. It suffices for one or more widthwise sipes 6 to be provided, and hence the number of widthwise sipes 6 can instead be one or two, or four or more.

Here, the groove width (opening width (opening width measured perpendicular to the extending direction of the groove in plan view)) of the circumferential main groove 2 is not particularly limited, since the groove width also depends on the number of circumferential main grooves 2, but can, for example, be between 5 mm and 25 mm. Similarly, the groove depth (maximum depth) of the circumferential main groove 2 is not particularly limited, but can, for example, be between 6 mm and 18 mm.

In the illustrated example, the circumferential main grooves 2 all extend along the tire circumferential direction (without inclination) in plan view of the tread surface 1, but at least one of the circumferential main grooves 2 may extend at an inclination relative to the tire circumferential direction. In this case, the circumferential main groove 2 may be inclined at an angle of, for example, 5° or less relative to the tire circumferential direction. In the illustrated example, all of the circumferential main grooves 2 extend straight in the tire circumferential direction, but at least one of the circumferential main grooves 2 may have a shape such as a zigzag shape or a curved shape.

The groove width (opening width (opening width measured perpendicular to the extending direction of the groove in plan view)) of the widthwise groove 4 is not particularly limited, since the groove width also depends on the number of widthwise grooves 4, but can, for example, be between 1.0 mm and 1.5 mm. Similarly, the groove depth (maximum depth) of the widthwise groove 4 is not particularly limited, but can, for example, be between 4 mm and 18 mm.

In the illustrated example, all of the widthwise grooves 4 extend along the tire width direction (without inclination). At least one widthwise groove 4 may, however, extend at an inclination relative to the tire width direction. In this case, the widthwise groove 4 is preferably inclined relative to the tire width direction at an inclination angle of 60° or less, and is preferably inclined at an inclination angle of 40° or less. In the illustrated example, all of the widthwise grooves 4 extend straight in the tire width direction, but at least one of the widthwise grooves 4 may have a bent portion.

Here, the sipe width (opening width (opening width measured perpendicular to the extending direction of the groove in plan view)) of the widthwise sipe 6 is not particularly limited, since the sipe width also depends on the number of widthwise sipes 6, but can, for example, be between 0.2 mm and 1.0 mm. Similarly, the sipe depth (maximum depth) of the widthwise sipe 6 is not particularly limited, but can, for example, be between 4.0 mm and 18.0 mm.

In the illustrated example, all of the widthwise sipes 6 extend along the tire width direction (without inclination). At least one widthwise sipe 6 may, however, extend at an inclination relative to the tire width direction. In this case, the widthwise sipe 6 is preferably inclined relative to the tire width direction at an inclination angle of 60° or less, and is preferably inclined at an inclination angle of 40° or less. In the illustrated example, all of the widthwise sipes 6 extend straight in the tire width direction, but at least one of the widthwise sipes 6 may have a bent portion.

In the illustrated example, both ends of the widthwise sipes 6 terminate within the block 5, but one or both ends may communicate with a circumferential main groove 2.

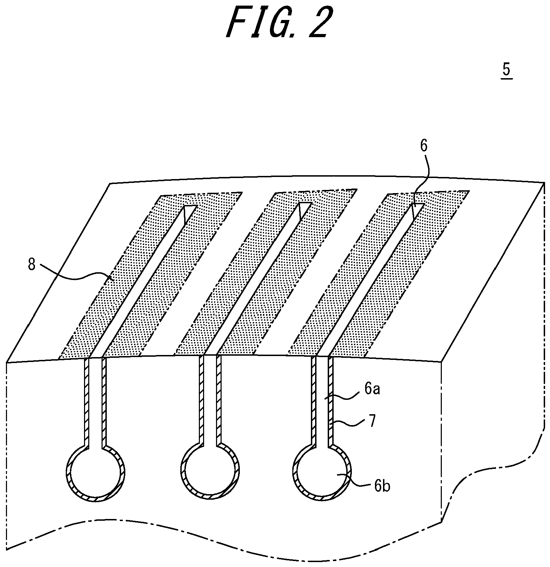

FIG. 2 is a transparent perspective view of the block in FIG. 1. As illustrated in FIG. 2, hard rubber 7 with a higher elastic modulus than that of the tread rubber is disposed in a tire radial region including at least the opening to the tread surface 1 of the walls defining the widthwise sipe 6 (the entire region of the walls in the present example). Specifically, in the illustrated example, the hard rubber 7 is disposed so as to extend continuously across both walls defining the widthwise sipe 6 and the sipe bottom.

The elastic modulus of the tread rubber can, for example, be between 2 MPa and 4 MPa. The elastic modulus of the hard rubber 7 can be in a range higher than the elastic modulus of the tread rubber, such as 3 MPa to 6 MPa.

The thickness of the hard rubber (the thickness measured in the normal direction to the groove wall, or the maximum thickness in a case in which the thickness varies) can be between 0.2 mm and 1 mm. The thickness of the hard rubber is preferably substantially constant over the entire region across which the hard rubber extends. While not particularly limited, the tread rubber is preferably foamed rubber, and the hard rubber is preferably non-foamed rubber.

The hard rubber can be provided by, for example, providing a film of unvulcanized hard rubber in advance at the position, before vulcanization, at which the widthwise sipe is to be provided, so that the hard rubber is located on the walls of the widthwise sipe when a blade is used to form the widthwise sipe.

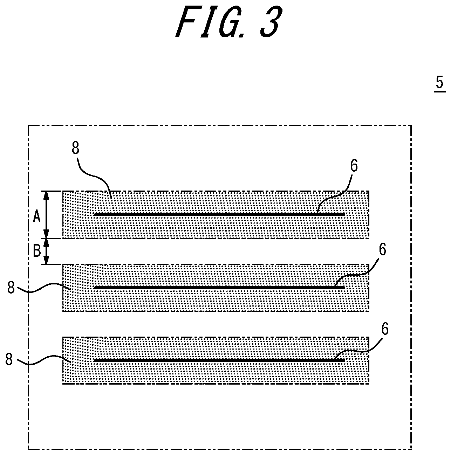

FIG. 3 is a plan view of the block in FIG. 1. Microfabrication 8 is applied in a region of the tread surface 1 surrounding at least a portion of the opening (the entire opening in the illustrated example) of the widthwise sipe 6 to the tread surface 1. For the sake of simplicity, the microfabrication 8 is not depicted in FIG. 1.

The effects of the pneumatic tire according to the present embodiment are described below.

According to the pneumatic tire of the present embodiment, first, the drainage performance and the on-ice performance can be improved, since one or more widthwise sipes 6 are provided in the blocks 5. On the other hand, the block rigidity can be increased and the on-snow performance improved, since the hard rubber 7 with a higher elastic modulus than that of the tread rubber is disposed in a tire radial region including at least the opening to the tread surface 1 of the walls defining the walls of the widthwise sipe 6 (the entire region of the walls in the present example).

As a result of intense study, I discovered that since the hard rubber 7 is disposed at the location where the tire contacts the ground in the above configuration with the hard rubber 7, the location that becomes the edge when the tire is rolling is in particular formed by the hard rubber 7, resulting in some cases in a decrease in the on-ice grip performance.

In the pneumatic tire of the present embodiment, the microfabrication 8 is therefore applied in a region of the tread surface 1 surrounding at least a portion of the opening (the entire opening in the illustrated example) of the widthwise sipe 6 to the tread surface 1. This can improve the grounding property at the corresponding location and can improve the on-ice and on-snow grip performance.

According to the pneumatic tire of the present embodiment, both the on-ice performance and the on-snow performance can thus be improved.

Here, the hard rubber is preferably disposed over the entire area of the walls that define the widthwise sipe. This configuration can further increase the block rigidity and further improve the on-snow performance.

The area surrounding at least a part of the opening of the width directional sipe to the tread surface preferably includes all of the opening, as in the illustrated example. This configuration can sufficiently secure the region for improving the grounding property and can further improve the on-ice and on-snow grip performance.

The aforementioned region preferably includes the range from the opening of the widthwise sipe to the tread surface to a position 2 mm away on each side in the tire circumferential direction. This configuration can sufficiently secure, in the tire circumferential direction, the region for improving the grounding property and can further improve the on-ice and on-snow grip performance.

In the case in which the block includes a plurality of widthwise sipes, as in the illustrated example, two of the aforementioned regions that are adjacent in the tire circumferential direction are preferably 1 mm or more and 10 mm or less apart in the tire circumferential direction (indicated as distance B in FIG. 3). Two of the regions that are adjacent in the tire circumferential direction are more preferably 1 mm or more and 5 mm or less apart in the tire circumferential direction. By the distance B being 1 mm or more, a decrease in block rigidity can be suppressed, whereas by the distance B being 10 mm (more preferably 5 mm) or less, the edge pressure can be sufficiently secured. In a case in which the separation distance varies in the tire width direction, the separation distance refers to the minimum separation distance.

In the case in which the block includes a plurality of widthwise sipes, as in the illustrated example, the ratio A/B preferably satisfies the following expression, where A (mm) is the length of the region in the tire circumferential direction, and B (mm) is the separation distance between the two regions in the tire circumferential direction.

$$0.1 \leq A/B \leq 6$$

By the ratio A/B being 0.1 or more, the improvement in grip by microfabrication can be effectively achieved, whereas by the ratio A/B being 6 or less, the occurrence of abnormal wear between adjacent sipes can be suppressed.

In a case in which the length A varies in the tire width direction, the length A refers to the minimum length. Also, in a case in which the separation distance B varies in the tire width direction, the separation distance refers to the minimum separation distance, as above.

At least one end (both ends in the illustrated example) of the widthwise sipe preferably terminates within the block, and the region preferably extends from the end to a position 2 mm or more away in the tire width direction. This configuration can sufficiently secure, in the tire width direction, the region for improving the grounding property and can further improve the on-ice and on-snow grip performance.

The microfabrication is preferably applied so that the surface roughness Ra of the aforementioned area is

between 10 μm and 500 μm. By the surface roughness Ra of the aforementioned region being 10 μm or more, the surface area of the aforementioned region is increased, whereas by the surface roughness Ra of the aforementioned area being 500 μm or less, the actual footprint area is increased relative to the surface area of the aforementioned region, thereby further improving the on-ice and on-snow grip performance. For the same reasons, the surface roughness Ra of the aforementioned region is more preferably between 25 μm and 400 μm, even more preferably between 50 μm and 200 μm.

In a case in which the block includes a plurality of the widthwise sipes, the surface roughness Ra of the region of the widthwise sipe on one side in the tire circumferential direction is preferably larger than the surface roughness Ra of the region of the widthwise sipe on the other side in the tire circumferential direction. Improving the water drainage property is advantageous for the on-ice and on-snow grip performance on the stepping-in side, and improving the grounding property is advantageous for the on-ice and on-snow grip performance on the kicking-out side. Therefore, by the aforementioned one side in the tire circumferential direction being the stepping-in side, the on-ice and on-snow performance can be effectively improved.

Similarly, in a case in which the rotation direction of the pneumatic tire is specified, the surface roughness Ra of the region of the widthwise sipe on the stepping-in side of the block is preferably larger than the surface roughness Ra of the region of the widthwise sipe 6 on the kicking-out side of the block.

For the same reasons, in a case in which the block includes a plurality of the widthwise sipes, the surface roughness Ra of the region of the widthwise sipe located farthest on one side in the tire circumferential direction (the stepping-in side) is preferably the largest. In a case in which the block includes three or more of the widthwise sipes, the surface roughness Ra of the region of the widthwise sipe 6 preferably decreases gradually from one side in the tire circumferential direction (the stepping-in side) to the other side in the tire circumferential direction (the kicking-out side).

The surface roughness Ra of the aforementioned region need not be set to differ between widthwise sipes, however, and may be the same.

The microfabrication is preferably applied so that the kurtosis Rku of the aforementioned region is between 2 and 6. By the kurtosis Rku being 2 or more, the improvement in the grounding property can be efficiently achieved by microfabrication, whereas by the kurtosis Rku being set to 6 or less, abnormal wear and deterioration of the grip due to excessive surface roughness can be suppressed. For the same reason, the kurtosis Rku of the aforementioned region is more preferably between 3 and 5.

In the illustrated example, the aforementioned region to which microfabrication is applied is rectangular in plan view, but this configuration is not limiting. The region can have various shapes, such as a partially rounded shape. For example, in a case in which the widthwise sipe is inclined relative to the tire width direction, the aforementioned region can have a parallelogram shape in plan view.

The aforementioned microfabrication can be formed by any known technique, such as by projection of a blast material.

Here, in a case in which the block includes a plurality of the widthwise sipes, it suffices for the widthwise sipe in which the hard rubber is disposed and to which microfabrication is applied in the aforementioned region to be any one or more widthwise sipes among the plurality of widthwise sipes. However, the hard rubber is preferably disposed and microfabrication is preferably applied in the region at least at the widthwise sipe adjacent to an edge of the block on one side in the tire circumferential direction. Since the contribution to the edge effect is particularly large on the kicking-out side of the block, this configuration can in particular further improve the on-ice and on-snow grip performance effectively when the one side in the tire circumferential direction is set to the kicking-out side.

Similarly, the rotation direction of the pneumatic tire is preferably specified, and the hard rubber is preferably disposed and microfabrication is preferably applied in the region at least at the widthwise sipe located farthest on the kicking-out side of the block.

In the example illustrated in FIG. 3, each widthwise sipe 6 includes a constant sipe width portion 6a on the tread surface 1 side, in which the sipe width (width measured parallel to the tread surface 1 in a cross-sectional view) is constant (equivalent to the opening width at the tread surface 1), and a widened portion 6b on the sipe bottom side, in which the sipe width is larger than on the tread surface 1 side. In the illustrated example, the widened portion 6d is substantially circular in a cross-sectional view. In this way, the widthwise sipe includes a widened portion, at the groove bottom side, in which the sipe width is larger than at the tread surface side. The reason is that block fragments (the portions of blocks divided by the widthwise sipes) can more easily collapse, improving the edge pressure and further improving the grip performance on ice and snow. This configuration can also improve the drainage performance when wear progresses. In the present example, the portion farther outward in the tire radial direction than the widened portion 6b is the constant sipe width portion 6a that has a constant sipe width, but this portion can also be a portion with a variable sipe width.

The sipe width of the constant sipe width portion 6a is not particularly limited but can, for example, be between 0.2 mm and 1.0 mm. The maximum width of the widened portion 6b is not particularly limited but can, for example, be between 1.2 mm and 6.0 mm. The extension length in the depth direction of the constant sipe width portion 6a is not particularly limited but can, for example, be between 2.0 mm and 12 mm. The extension length in the depth direction of the widened portion 6b is not particularly limited but can, for example, be between 2.5 mm and 11.0 mm.

Here, the block preferably includes a plurality of widthwise sipes, and the width of the widened portion on one side in the tire circumferential direction is preferably larger than the width of the widened portion on another side in the tire circumferential direction. The contribution to the edge effect is particularly large on the kicking-out side of the block. Therefore, when the one side in the tire circumferential direction is set to the kicking-out side, the block fragments (the portions of blocks divided by the widthwise sipes) on the kicking-out side can more easily collapse, and in particular the on-ice and on-snow grip performance can be further improved effectively. In a case in which the block includes three or more of the widthwise sipes, the width of the widened portion preferably decreases gradually from one side in the tire circumferential direction to the other side in the tire circumferential direction.

Similarly, the rotation direction of the pneumatic tire is preferably specified, and the width of the widened portion on the kicking-out side of the block is preferably larger than the width of the widened portion on the stepping-in side of the block. In a case in which the block includes three or more of the widthwise sipes, the width of the widened portion preferably decreases gradually from the kicking-out side of the block to the stepping-in side of the block.

The pneumatic tire tread of the present invention can suitably be used in a studless tire.

REFERENCE SIGNS LIST

| | |
|---|---|
| 1 | Tread surface |
| 2, 2a, 2b, 2c | Circumferential main groove |
| 3, 3a, 3b, 3c, 3d | Land portion |
| 4 | Widthwise groove |
| 5 | Block |
| 6 | Widthwise sipe |
| 6a | Constant sipe width portion |
| 6b | Widened portion |
| 7 | Hard rubber |
| 8 | Microfabrication |
| CL | Tire equatorial plane |
| TE | Tread edge |

**Claims**

1. A pneumatic tire comprising, on a tread surface (1), a plurality of circumferential main grooves (2, 2a, 2b, 2c) extending in a tire circumferential direction, and a plurality of land portions (3, 3a, 3b, 3c, 3d) defined between circumferential main grooves adjacent in a tire width direction among the plurality of circumferential main grooves or by the circumferential main grooves and tread edges (TE), wherein

   the land portions comprise a plurality of widthwise grooves (4) extending in the tire width direction and are divided into a plurality of blocks (5) by the widthwise grooves,
   at least one widthwise sipe (6) extending in the tire width direction is included within the blocks,
   hard rubber (7) with a higher elastic modulus than that of tread rubber is disposed in a tire radial region including at least an opening to the tread surface of a wall defining the widthwise sipe, and
   **characterized in that** microfabrication (8) is applied in at least one region of the tread surface surrounding at least a portion of the opening of the widthwise sipe to the tread surface,
   wherein the widthwise sipe includes a widened portion (6b), at a groove bottom side, in which a sipe width is larger than at the tread surface side.

2. The pneumatic tire of claim 1, wherein the hard rubber is disposed over an entire area of the wall defining the widthwise sipe.

3. The pneumatic tire of claim 1 or 2, wherein the region includes a range from the opening of the widthwise sipe to the tread surface to a position 2 mm away on each side in the tire circumferential direction.

4. The pneumatic tire of any one of claims 1 to 3, wherein

the at least one widthwise sipe included within the blocks comprises a plurality of widthwise sipes, and
the at least one region comprises two regions that are adjacent in the tire circumferential direction and are 1 mm or more and 10 mm or less apart in the tire circumferential direction.

5. The pneumatic tire of any one of claims 1 to 4, wherein

the at least one widthwise sipe included within the blocks comprises a plurality of widthwise sipes,
A (mm) is a length of the region in the tire circumferential direction,
the at least one region comprises two regions that are adjacent in the tire circumferential direction, and B (mm) is a separation distance between the two regions in the tire circumferential direction, and

$$0.1 \leq A/B \leq 6.$$

6. The pneumatic tire of any one of claims 1 to 5, wherein

at least one end of the widthwise sipe terminates within the block, and
the region includes a range from the at least one end of the widthwise sipe to a position 2 mm away in the tire width direction.

7. The pneumatic tire of any one of claims 1 to 6, wherein the microfabrication is applied so that a surface roughness Ra of the region is between 10 $\mu$m and 500 $\mu$m.

8. The pneumatic tire of claim 7, wherein

the at least one widthwise sipe included within the blocks comprises a plurality of widthwise sipes, and
a surface roughness Ra of the region of the widthwise sipe on one side in the tire circumferential direction is larger than a surface roughness Ra of the region of the widthwise sipe on another side in the tire circumferential direction.

9. The pneumatic tire of claim 7 or 8, wherein

a rotation direction of the pneumatic tire is specified,
the at least one widthwise sipe included within the blocks comprises a plurality of widthwise sipes, and
a surface roughness Ra of the region of the widthwise sipe on a stepping-in side of the block is larger than a surface roughness Ra of the region of the widthwise sipe on a kicking-out side of the block.

10. The pneumatic tire of any one of claims 1 to 9, wherein the micro fabrication is applied so that a sharpness of the surface roughness, kurtosis Rku, calculated based on ISO 25178 of the region is between 2 and 6.

11. The pneumatic tire of any one of claims 1 to 10, wherein

the at least one widthwise sipe comprises a plurality of widthwise sipes, and
at least at the widthwise sipe adjacent to an edge of the block on one side in the tire circumferential direction, the hard rubber is disposed and micro fabrication is applied in the region.

12. The pneumatic tire of any one of claims 1 to 11, wherein

a rotation direction of the pneumatic tire is specified,
the at least one widthwise sipe included within the blocks comprises a plurality of widthwise sipes, and
at least at the widthwise sipe located farthest on a kicking-out side of the block, the hard rubber is disposed and microfabrication is applied in the region.

13. The pneumatic tire of any one of claims 1 to 12, wherein

the at least one widthwise sipe included within the blocks comprises a plurality of widthwise sipes, and
a width of the widened portion on one side in the tire circumferential direction is larger than a width of the widened portion on another side in the tire circumferential direction.

**14.** The pneumatic tire of claim 13, wherein

a rotation direction of the pneumatic tire is specified,
the at least one widthwise sipe included within the blocks comprises a plurality of widthwise sipes, and
a width of the widened portion on a kicking-out side of the block is larger than a width of the widened portion on a stepping-in side of the block.


**Patentansprüche**

**1.** Luftreifen, der, auf einer Lauffläche (1), eine Vielzahl von umlaufenden Hauptrillen (2, 2a, 2b, 2c), die sich in einer Reifenumfangsrichtung erstrecken, und eine Vielzahl von Stegabschnitten (3, 3a, 3b, 3c, 3d), die zwischen umlaufenden Hauptrillen, die in einer Reifenbreitenrichtung unter der Vielzahl von umlaufenden Hauptrillen benachbart sind, oder durch die umlaufenden Hauptrillen und Laufflächenkanten (TE) definiert sind, umfasst, wobei

die Stegabschnitte eine Vielzahl von Breitenrichtungsrillen (4) umfassen, die sich in der Reifenbreitenrichtung erstrecken, und durch die Breitenrichtungsrillen in eine Vielzahl von Blöcken (5) geteilt sind,
mindestens eine Breitenrichtungslamelle (6), die sich in der Reifenbreitenrichtung erstreckt, innerhalb der Blöcke eingeschlossen ist,
harter Gummi (7) mit einem höheren Elastizitätsmodul als derjenige von Laufflächengummi in einem Reifenradialbereich angeordnet ist, der mindestens eine Öffnung zu der Lauffläche einer Wand, welche die Breitenrichtungslamelle definiert, einschließt, und
**dadurch gekennzeichnet, dass** Mikrofabrikation (8) in mindestens einem Bereich der Lauffläche angewendet wird, der mindestens einen Abschnitt der Öffnung der Breitenrichtungslamelle zu der Lauffläche umgibt,
wobei die Breitenrichtungslamelle einen verbreiterten Abschnitt (6b), an einer Rillensohlenseite, einschließt, in dem eine Lamellenbreite größer ist als an der Laufflächenseite.

**2.** Luftreifen nach Anspruch 1, wobei der harte Gummi über ein gesamtes Gebiet der Wand, welche die Breitenrichtungslamelle definiert, angeordnet ist.

**3.** Luftreifen nach Anspruch 1 oder 2, wobei der Bereich eine Spanne von der Öffnung der Breitenrichtungslamelle zu der Lauffläche bis zu einer Position, 2 mm entfernt auf jeder Seite in der Reifenumfangsrichtung, einschließt.

**4.** Luftreifen nach einem der Ansprüche 1 bis 3, wobei

die mindestens eine Breitenrichtungslamelle, die innerhalb der Blöcke eingeschlossen ist, eine Vielzahl von Breitenrichtungslamellen umfasst und
der mindestens eine Bereich zwei Bereiche umfasst, die in der Reifenumfangsrichtung benachbart sind und in der Reifenumfangsrichtung 1 mm oder mehr und 10 mm oder weniger voneinander beabstandet sind.

**5.** Luftreifen nach einem der Ansprüche 1 bis 4, wobei

die mindestens eine Breitenrichtungslamelle, die innerhalb der Blöcke eingeschlossen ist, eine Vielzahl von Breitenrichtungslamellen umfasst,
A (mm) eine Länge des Bereichs in der Reifenumfangsrichtung ist,
der mindestens eine Bereich zwei Bereiche umfasst, die in der Reifenumfangsrichtung benachbart sind, und
B (mm) ein Trennungsabstand zwischen den zwei Bereichen in der Reifenumfangsrichtung ist, und

$$0,1 \leq A/B \leq 6.$$

**6.** Luftreifen nach einem der Ansprüche 1 bis 5, wobei

mindestens ein Ende der Breitenrichtungslamelle innerhalb des Blocks endet; und
der Bereich eine Spanne von dem mindestens einen Ende der Breitenrichtungslamelle bis zu einer Position, 2 mm entfernt in der Reifenumfangsrichtung, einschließt.

**7.** Luftreifen nach einem der Ansprüche 1 bis 6, wobei die Mikrofabrikation angewendet wird, sodass eine Oberflächenrauheit Ra des Bereichs zwischen 10 µm und 500 µm beträgt.

8.  Luftreifen nach Anspruch 7, wobei

die mindestens eine Breitenrichtungslamelle, die innerhalb der Blöcke eingeschlossen ist, eine Vielzahl von Breitenrichtungslamellen umfasst, und
eine Oberflächenrauheit Ra des Bereichs der Breitenrichtungslamelle auf einer Seite in der Reifenumfangsrichtung größer ist als eine Oberflächenrauheit Ra des Bereichs der Breitenrichtungslamelle auf einer anderen Seite in der Reifenumfangsrichtung.

9.  Luftreifen nach Anspruch 7 oder 8, wobei

eine Rotationsrichtung des Luftreifens spezifiziert ist,
die mindestens eine Breitenrichtungslamelle, die innerhalb der Blöcke eingeschlossen ist, eine Vielzahl von Breitenrichtungslamellen umfasst, und
eine Oberflächenrauheit Ra des Bereichs der Breitenrichtungslamelle auf einer Seite der ersten Berührung des Blocks größer ist als eine Oberflächenrauheit Ra des Bereichs der Breitenrichtungslamelle auf einer Seite der letzten Ablösung des Blocks.

10. Luftreifen nach einem der Ansprüche 1 bis 9, wobei die Mikrofabrikation angewendet wird, sodass eine Schärfe der Oberflächenrauheit, die Kurtosis Rku, berechnet auf Grundlage von ISO 25178, des Bereichs zwischen 2 und 6 beträgt.

11. Luftreifen nach einem der Ansprüche 1 bis 10, wobei

die mindestens eine Breitenrichtungslamelle eine Vielzahl von Breitenrichtungslamellen umfasst und
mindestens an der Breitenrichtungslamelle, die zu einer Kante des Blocks auf einer Seite in der Reifenumfangsrichtung benachbart ist, der harte Gummi angeordnet ist und Mikrofabrikation in dem Bereich angewendet wird.

12. Luftreifen nach einem der Ansprüche 1 bis 11, wobei

eine Rotationsrichtung des Luftreifens spezifiziert ist,
die mindestens eine Breitenrichtungslamelle, die innerhalb der Blöcke eingeschlossen ist, eine Vielzahl von Breitenrichtungslamellen umfasst, und
mindestens an der Breitenrichtungslamelle, die sich am weitesten auf einer Seite der letzten Ablösung des Blocks befindet, der harte Gummi angeordnet ist und Mikrofabrikation in dem Bereich angewendet wird.

13. Luftreifen nach einem der Ansprüche 1 bis 12, wobei

die mindestens eine Breitenrichtungslamelle, die innerhalb der Blöcke eingeschlossen ist, eine Vielzahl von Breitenrichtungslamellen umfasst, und
eine Breite des verbreiterten Abschnitts auf einer Seite in der Reifenumfangsrichtung größer ist als eine Breite des verbreiterten Abschnitts auf einer anderen Seite in der Reifenumfangsrichtung.

14. Luftreifen nach Anspruch 13, wobei

eine Rotationsrichtung des Luftreifens spezifiziert ist,
die mindestens eine Breitenrichtungslamelle, die innerhalb der Blöcke eingeschlossen ist, eine Vielzahl von Breitenrichtungslamellen umfasst, und
eine Breite des verbreiterten Abschnitts auf einer Seite der letzten Ablösung des Blocks größer ist als eine Breite des verbreiterten Abschnitts auf einer Seite der ersten Berührung des Blocks.

**Revendications**

1.  Bandage pneumatique comprenant, sur une surface de bande de roulement (1), une pluralité de rainures circonférentielles principales (2, 2a, 2b, 2c) s'étendant dans une direction circonférentielle du pneumatique, et une pluralité de parties d'appui (3, 3a, 3b, 3c, 3d) définies entre des rainures circonférentielles principales adjacentes, dans une direction de la largeur du pneumatique, parmi la pluralité de rainures circonférentielles principales, ou par les rainures circonférentielles principales et les bords de la bande de roulement (TE), dans lequel

les parties d'appui comprennent une pluralité de rainures dans le sens de la largeur (4) s'étendant dans la direction de la largeur du pneumatique et sont divisées en une pluralité de pavés (5) par les rainures dans le sens de la largeur,

au moins une lamelle dans le sens de la largeur (6) s'étendant dans la direction de la largeur du pneumatique est incluse à l'intérieur des pavés,

une gomme dure (7), présentant un module d'élasticité supérieur à celui d'une gomme de bande de roulement, est disposée dans une région dans la direction radiale du pneumatique incluant au moins une ouverture vers la surface de bande de roulement d'une paroi définissant la lamelle dans le sens de la largeur, et

**caractérisé en ce qu'**une microfabrication (8) est appliquée dans au moins une région de la surface de bande de roulement entourant au moins une partie de l'ouverture de la lamelle dans le sens de la largeur vers la surface de bande de roulement,

dans lequel la lamelle dans le sens de la largeur inclut une partie élargie (6b), au niveau d'un côté de fond de rainure, dans laquelle une largeur de lamelle est supérieure à celle du côté de surface de bande de roulement.

**2.** Bandage pneumatique selon la revendication 1, dans lequel la gomme dure est disposée sur une zone entière de la paroi définissant la lamelle dans le sens de la largeur.

**3.** Bandage pneumatique selon la revendication 1 ou 2, dans lequel la région inclut une plage allant de l'ouverture de la lamelle dans le sens de la largeur vers la surface de bande de roulement, jusqu'à une position espacée de 2 mm de chaque côté dans la direction circonférentielle du pneumatique.

**4.** Bandage pneumatique selon l'une quelconque des revendications 1 à 3, dans lequel

l'au moins une lamelle dans le sens de la largeur incluse à l'intérieur des pavés comprend une pluralité de lamelles dans le sens de la largeur, et

l'au moins une région comprend deux régions qui sont adjacentes dans la direction circonférentielle du pneumatique et sont espacées de 1 mm ou plus et de 10 mm ou moins dans la direction circonférentielle du pneumatique.

**5.** Bandage pneumatique selon l'une quelconque des revendications 1 à 4, dans lequel

l'au moins une lamelle dans le sens de la largeur incluse à l'intérieur des pavés comprend une pluralité de lamelles dans le sens de la largeur,

A (mm) désigne une longueur de la région dans la direction circonférentielle du pneumatique,

l'au moins une région comprend deux régions qui sont adjacentes dans la direction circonférentielle du pneumatique, et B (mm) désigne une distance de séparation entre les deux régions dans la direction circonférentielle du pneumatique, et

$$0,1 \leq A/B \leq 6.$$

**6.** Bandage pneumatique selon l'une quelconque des revendications 1 à 5, dans lequel

au moins une extrémité de la lamelle dans le sens de la largeur se termine à l'intérieur du pavé, et

la région inclut une plage allant de l'au moins une extrémité de la lamelle dans le sens de la largeur vers une position espacée de 2 mm dans la direction de la largeur du pneumatique.

**7.** Bandage pneumatique selon l'une quelconque des revendications 1 à 6, dans lequel la microfabrication est appliquée de sorte qu'une rugosité de surface Ra de la région est comprise entre 10 $\mu$m et 500 $\mu$m.

**8.** Bandage pneumatique selon la revendication 7, dans lequel

l'au moins une lamelle dans le sens de la largeur incluse à l'intérieur des pavés comprend une pluralité de lamelles dans le sens de la largeur, et

une rugosité de surface Ra de la région de la lamelle dans le sens de la largeur sur un côté dans la direction circonférentielle du pneumatique est supérieure à une rugosité de surface Ra de la région de la lamelle dans le sens de la largeur sur un autre côté dans la direction circonférentielle du pneumatique.

9. Bandage pneumatique selon la revendication 7 ou 8, dans lequel

une direction de rotation du bandage pneumatique est spécifiée,
l'au moins une lamelle dans le sens de la largeur incluse à l'intérieur des pavés comprend une pluralité de lamelles dans le sens de la largeur, et
une rugosité de surface Ra de la région de la lamelle dans le sens de la largeur sur un côté de premier contact du pavé est supérieure à une rugosité de surface Ra de la région de la lamelle dans le sens de la largeur sur un côté de dernier dégagement du pavé.

10. Bandage pneumatique selon l'une quelconque des revendications 1 à 9, dans lequel la microfabrication est appliquée de sorte qu'une finesse de la rugosité de surface, kurtosis Rku, calculée sur la base de la norme ISO 25178, de la région est comprise entre 2 et 6.

11. Bandage pneumatique selon l'une quelconque des revendications 1 à 10, dans lequel

l'au moins une lamelle dans le sens de la largeur comprend une pluralité de lamelles dans le sens de la largeur, et
au moins au niveau de la lamelle dans le sens de la largeur adjacente à un bord du pavé sur un côté dans la direction circonférentielle du pneumatique la gomme dure est disposée et une microfabrication est appliquée dans la région.

12. Bandage pneumatique selon l'une quelconque des revendications 1 à 11, dans lequel

une direction de rotation du bandage pneumatique est spécifiée,
l'au moins une lamelle dans le sens de la largeur incluse à l'intérieur des pavés comprend une pluralité de lamelles dans le sens de la largeur, et
au moins au niveau de la lamelle dans le sens de la largeur située le plus à l'écart sur un côté de dernier dégagement du pavé, la gomme dure est disposée et une microfabrication est appliquée dans la région.

13. Bandage pneumatique selon l'une quelconque des revendications 1 à 12, dans lequel

l'au moins une lamelle dans le sens de la largeur incluse à l'intérieur des pavés comprend une pluralité de lamelles dans le sens de la largeur, et
une largeur de la partie élargie sur un côté dans la direction circonférentielle du pneumatique est supérieure à une largeur de la partie élargie sur un autre côté dans la direction circonférentielle du pneumatique.

14. Bandage pneumatique selon la revendication 13, dans lequel

une direction de rotation du bandage pneumatique est spécifiée,
l'au moins une lamelle dans le sens de la largeur incluse à l'intérieur des pavés comprend une pluralité de lamelles dans le sens de la largeur, et
une largeur de la partie élargie sur un côté de dernier dégagement du pavé est supérieure à une largeur de la partie élargie sur un côté de premier contact du pavé.

# *FIG. 1*

# FIG. 2

# FIG. 3

**EP 4 043 244 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006082632 A
- JP 2019064481 A
- WO 2018225501 A1